(19) Europäisches Patentamt
European Patent Office
Office européen des brevets

(11) Veröffentlichungsnummer: **0 160 862**
**B1**

(12) # EUROPÄISCHE PATENTSCHRIFT

(45) Veröffentlichungstag der Patentschrift:
**08.06.88**

(51) Int. Cl.⁴: **B 26 B 19/38**, F 16 J 15/32

(21) Anmeldenummer: **85104535.1**

(22) Anmeldetag: **15.04.85**

(54) Dichtung des Schaltschiebers eines Trockenrasierapparates.

(30) Priorität: **21.04.84 DE 3415123**

(43) Veröffentlichungstag der Anmeldung:
**13.11.85 Patentblatt 85/46**

(45) Bekanntmachung des Hinweises auf die Patenterteilung:
**08.06.88 Patentblatt 88/23**

(84) Benannte Vertragsstaaten:
**AT BE CH DE FR GB IT LI LU NL SE**

(56) Entgegenhaltungen:
**US-A-3 550 987**
**US-A-4 159 118**

(73) Patentinhaber: **Braun Aktiengesellschaft,
Rüsselsheimer Strasse 22, D-6000 Frankfurt/Main
(DE)**

(72) Erfinder: **Schweingruber, Otto, Höhenblick 1,
D-6246 Glashütten (DE)**

(74) Vertreter: **Einsele, Rolf, Braun Aktiengesellschaft
Postfach 1120 Frankfurter Strasse 145, D-6242
Kronberg Taunus (DE)**

## Beschreibung

Die Erfindung betrifft eine Dichtung für den Schaltschieber eines Trockenrasierapparates gegen das Eindringen von Schmutz und Staub, insbesondere Rasierstaub in das Apparateinnere, bestehend aus einer elastischen Dichtleiste, die - im Aparategehäuse festgelegt am gehäuseseitig geführten Schaltschieber zur abdichtenden Anlage kommt.

Bisher bekannte Abdichtungen dieser Art sind hinsichtlich ihrer Abdichtsfunktion äußerst mangelhaft, denn die ihnen zugehörige Dichtleiste ist aus einem zwar elastischen, jedoch kompakten Körper mit prismatisch vorspringender Dichtkante gebildet, die an dem das Ein- oder Ausschalten des apparateseitigen Antriebsmotors und ggf. noch das Zu- bzw. Abschalten des Langhaarscherteiles bewirkenden Schaltschieber des Trockenrasierapparates zur abdichtenden Anlage kommen soll. Infolge der Formsteifigkeit dieser Dichtleiste ist die Wirkung der bekannten Abdichtung äußerst begrenzt, da von ihr die bestehenden Toleranzen innerhalb der gehäuseseitigen Führung des Schaltschiebers nicht ausreichend ausgeglichen werden, so daß die Leiste mit ihrer Dichtkante im Extremfall überhaupt nicht zur abdichtenden Anlage am Schaltschieber kommt. Darüber hinaus hat eine solche Abdichtung - bedingt durch die relativ formsteife Konzeption ihrer kompakten Dichtleiste keinen ausreichenden "Wischeffekt", da die prismatische Dichtkante der Dichtleiste nicht mit dem zum vollkommenen Abdichten erforderlichen Andruck an der Oberfläche des Schaltschiebers gleitet. Eine zuvor aufgezeigte Nachteile aufweisende Abdichtung ist aus dem DE-U-7 625 976 bekannt.

Aufgabe der Erfindung ist es, eine Dichtung zu schaffen, die eine Abdichtung gegen Schmutz und Staub, insbesondere Rasierstaub, zwischen zwei relativ zueinander beweglichen Teilen eines Rasierapparates, und zwar einem Apparategehäuse und einem gehäuseseitig geführten Schaltschieber unter Ausgleich fertigungsbedingter Toleranzen sowie unter Sicherstellung eines wirksamen Wischeffektes gewährleistet.

Gelöst wird diese Aufgabe mit der nach dem Oberbegriff des Anspruchs 1 konzipierten Abdichtung gemäß der Erfindung dadurch, daß die Dichtleiste zumindest im Bereich ihrer die abdichtende Anlage am Schaltschieber bewirkenden Verformungszone einen Hohlraum aufweist.

Eine solche Ausbildung der Dichtleiste schafft eine äußerst elastische Verformungszone im Bereich der abdichtenden Anlage der Dichtleiste am Schaltschieber infolge der hierbei gewonnenen Elastizität und Nachgiebigkeit dieses Leistenbereichs, womit der Wischeffekt der Abdichtung bedeutend erhöht und sonach jeweils vorhandene Toleranzen innerhalb der gehäuseseitigen Schieberführung ausgeglichen werden.

Nach einer Ausführungsform der Erfindung ist die Dichtleiste U-förmig ausgebildet und auf eine Rippe am Apparategehäuse aufsteckbar.

Vorteilhaft umfaßt die Dichtleiste im Bereich ihrer die abdichtende Anlage am Schaltschieber bewirkenden Verformungszone einen Hohlraum, der in Andruckrichtung der Dichtleiste länglich ausgebildet ist.

Diese Ausbildung gewährleistet eine besonders wirksame Abdichtfunktion der hohlen Dichtleiste.

Der sonach äußerst funktionswichtige Hohlraum der Dichtleiste kann auf unterschiedliche Weise gebildet werden. So ist es beispielsweise möglich, diesen Hohlraum der Dichtleiste einem kompakten Leistenkörper einzuformen.

Eine demgegenüber einfache und präzise Fertigung der Dichtleiste ergibt sich, wenn der Hohlraum der Dichtleiste gebildet ist aus zwei einem offenen Leistenkörper spiegelbildlich eingeformten, muldenförmigen Ausschnitten, die beim die Dichtleiste erzeugenden Schließen des Leistenkörpers sich zu einem geschlossenen Hohlraum zusammenfügen.

Diese Gestaltung der Dichtleiste ermöglicht deren Herstellung aus einem gelenkartig konzipierten, beispielsweise stranggepreßten Leistenkörper mit eingeformten, muldenförmigen Ausschnitten als Hohlkörperhälften, die beim Schließen des gelenkartigen Leistenkörpers durch das Gegeneinanderdrücken seiner auseinanderspreizenden freien Schenkel den die Verformungszone der Dichtleiste schaffenden, geschlossenen Hohlraum bilden. Bei dieser Ausführung der Dichtleiste entfällt also das geringfügig unpräzise Herstellen eines geschlossenen Hohlraumes beim Fertigungsprozeß.

Eine hinsichtlich Formgebung und Herstellung besonders vorteilhafte Ausführungsart der der erfindungsgemäßen Schaltschieberabdichtung zugehörigen Dichtleiste besteht darin, daß eine Rippe innerhalb einer Aufnahmenut für die U-förmige Dichtleiste vorgesehen ist.

Diese Dichtleiste läßt sich als einfacher, geometrischer Körper ohne jegliche gesonderte Formgebung nicht nur leicht, beispielsweise durch Strangpressen endlos herstellen, sondern sie läßt sich darüber hinaus auch ohne Schwierigkeiten durch einfaches Einstecken ihrer U-Schenkel in die beiden, durch die mittige Aufsteckrippe jeder Aufnahmenut gebildeten Montageschlitze am bzw. jm Rasierergehäuse sicher montieren und festlegen. Die hier jeder Aufnahmenut zugeordnete Rippe erzeugt dabei - infolge ihrer gegenüber der die Gleitebene des Schaltschiebers bildenden Oberfläche die Dichtleiste aufnehmenden Gehäusewandung des Trockenrasierapparates beträchtlich zurückgesetzten Höhe - einen die gewünschte Elastizität der Verformungszone der Dichtleiste stets gewährleistenden Hohlraum.

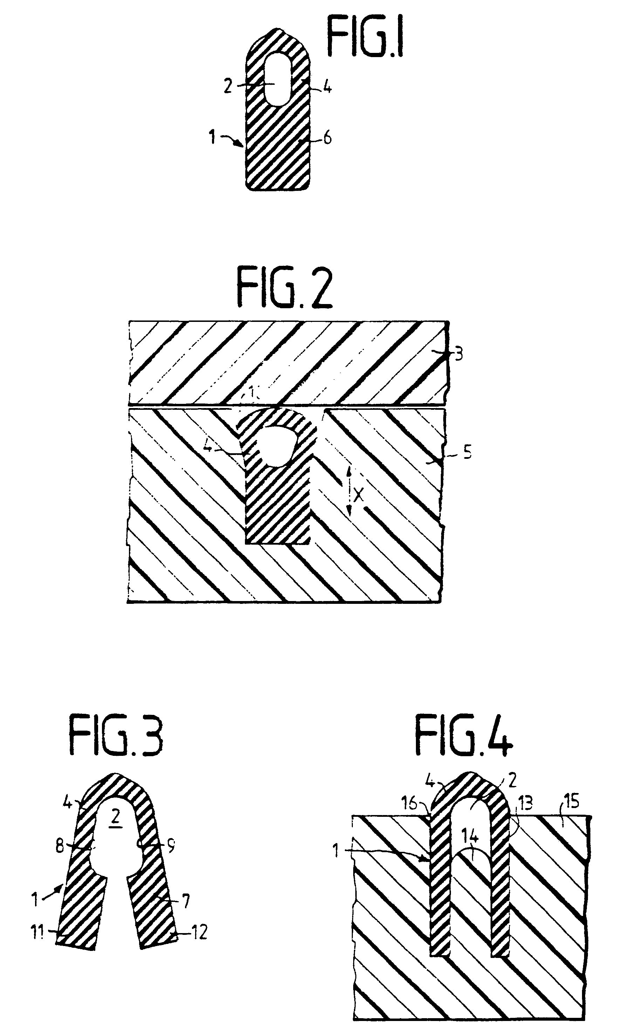

## Patentansprüche

1. Dichtung für den Schaltschieber (3) eines Trockenrasierapparates gegen das Eindringen von Schmutz und Staub, insbesondere Rasierstaub in das Apparateinnere, bestehend aus einer elastischen Dichtleiste (1), die - im Apparategehäuse (5, 15) festgelegt - am gehäuseseitig geführten Schaltschieber (3) zur abdichtenden Anlage kommt, dadurch gekennzeichnet, daß die Dichtleiste (1) zumindest im Bereich ihrer die abdichtende Anlage am Schaltschieber (3) bewirkenden Verformungszone (4) einen Hohlraum (2) aufweist.

2. Dichtung nach Anspruch 1, dadurch gekennzeichnet, daß die Dichtleiste (1) U-förmig ausgebildet und auf eine Rippe (14) am Apparategehäuse (15) aufsteckbar ist.

3. Dichtung nach Anspruch 1 oder 2, dadurch gekennzeichnet, daß der Hohlraum (2) der Dichtleiste (1) in Andruckrichtung der Dichtleiste gesehen länglich ausgebildet ist.

4. Dichtung nach Anspruch 1 oder 3, dadurch gekennzeichnet, daß der Hohlraum (2) der Dichtleiste (1) einem kompakten Leistenkörper (6) eingeformt ist.

5. Dichtung nach Anspruch 1 oder 3, dadurch gekennzeichnet, daß der Hohlraum (2) der Dichtleiste (1) gebildet ist aus zwei einem offenen Leistenkörper (7) spiegelbildlich eingeformten, muldenförmigen Ausschnitten (8 und 9), die beim die Dichtleiste erzeugenden Schließen des Leistenkörpers (7) sich zu dem Hohlraum (2) zusammenfügen.

6. Dichtung nach Anspruch 2 oder 3, dadurch gekennzeichnet, daß die Rippe (14) innerhalb einer Aufnahmenut (16) für die U-förmige Dichtleiste (1) vorgesehen ist.

## Claims

1. A seal for the switch slide (3) of a dry shaver which prevents the penetration of dirt and dust, in particular shaving dust, into the interior of the device, consisting of an elastic sealing strip (1) which - being fixedly located in position in the device housing (5, 15) - is in sealing engagement with the switch slide (3) guided on the housing, characterized in that the sealing strip (1) includes a cavity (2) at least in the area of its deformation zone (4) providing the sealing engagement with the switch slide (3).

2. A seal as claimed in claim 1, characterized in that the sealing strip (1) is of U-shaped configuration and adapted to be mounted on a rib (14) in the device housing (15).

3. A seal as claimed in claim 1 or claim 2, characterized in that the cavity (2) of the sealing strip (1) is elongated when viewed in the direction of pressure application of the sealing strip.

4. A seal as claimed in claim 1 or claim 3, characterized in that the cavity (2) of the sealing strip (1) is molded into a compact strip body (6).

5. A seal as claimed in claim 1 or claim 3, characterized in that the cavity (2) of the sealing strip (1) is formed of two groove-shaped cutouts (8 and 9) molded in mirror-image fashion into an open strip body (7), said cutouts combining to form said cavity (2) when the strip body (7) is closed thereby producing the sealing strip.

6. A seal as claimed in claim 2 or claim 3, characterized in that the rib (14) is provided within a groove (16) receiving the U-shaped sealing strip (1).

## Revendications

1. Joint d'étanchéité pour le commutateur coulissant (3) d'un rasoir électrique, destiné à s'opposer à la pénétration de saleté et de poussières, en particulier de poussières de rasage, à l'intérieur de l'appareil et constitué d'une baguette d'étanchéité élastique (1) qui, fixée dans le boîtier d'appareil (5, 15), vient en appui étanche sur le commutateur coulissant (3) guidé du côté boîtier, caractérisé en ce que la baguette d'étanchéité (1) présente une cavité (2) au moins dans la région de sa zone de déformation (4) produisant l'appui étanche sur le commutateur coulissant (3).

2. Joint d'étanchéité suivant la revendication 1, caractérisé en ce que la baguette d'étanchéité (1) est réalisée sous la forme d'un U et en ce qu'elle peut être emmanchée sur une nervure (14) du boîtier (15) de l'appareil.

3. Joint d'étanchéité suivant l'une des revendications 1 et 2, caractérisé en ce que la cavité (2) de la baguette d'étanchéité (1) est réalisée sous une forme allongée dans la direction d'application de la baguette d'étanchéité.

4. Joint d'étanchéité suivant l'une des revendications 1 et 3, caractérisé en ce que la cavité (2) de la baguette d'étanchéité (1) est façonnée sur un corps de baguette compact (6).

5. Joint d'étanchéité suivant l'une des revendications 1 et 3, caractérisé en ce que la cavité (2) de la baguette d'étanchéité (1) est formée de deux segments (8 et 9) en forme de cuvette qui sont façonnés de manière réfléchie dans un miroir en un corps de baguette ouvert (7) et qui, lors de la fermeture du corps de baguette (7) produisant la baguette d'étanchéité, s'assemblent pour donner lieu à la cavité (2).

6. Joint d'étanchéité suivant l'une des revendications 2 et 3, caractérisé en ce que la nervure (14) est prévue à l'intérieur d'une rainure de réception (16) de la baguette d'étanchéité (1) en forme de U.

0 160 862

FIG.1

FIG.2

FIG.3

FIG.4